(19) Europäisches Patentamt / European Patent Office / Office européen des brevets

(11) **EP 3 893 163 B1**

(12) **EUROPEAN PATENT SPECIFICATION**

(45) Date of publication and mention
of the grant of the patent:
**18.06.2025 Bulletin 2025/25**

(21) Application number: **20315140.2**

(22) Date of filing: **09.04.2020**

(51) International Patent Classification (IPC):
**G06N 3/04** *(2023.01)*   **G06N 3/08** *(2023.01)*
**G06N 5/02** *(2023.01)*

(52) Cooperative Patent Classification (CPC):
**G06N 3/088; G06N 3/042; G06N 3/044;**
**G06N 3/045; G06N 5/025**

(54) **END-TO-END GRAPH CONVOLUTION NETWORK**

END-TO-END-GRAPH-FALTUNGSNETZWERK

RÉSEAU DE CONVOLUTION GRAPHIQUE DE BOUT EN BOUT

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**13.10.2021 Bulletin 2021/41**

(73) Proprietor: **Naver Corporation**
**Seongnam-si, Gyeonggi-do 13561 (KR)**

(72) Inventors:
• **Perez, Julien**
  **38000 Grenoble (FR)**
• **Funtowicz, Morgan**
  **92130 Issy-les-Moulineaux (FR)**

(74) Representative: **Grünecker Patent- und**
**Rechtsanwälte**
**PartG mbB**
**Leopoldstraße 4**
**80802 München (DE)**

(56) References cited:
• **ZHOU KAI ET AL: "Multi-task Learning for**
**Relation Extraction", 2019 IEEE 31ST**
**INTERNATIONAL CONFERENCE ON TOOLS**
**WITH ARTIFICIAL INTELLIGENCE (ICTAI), IEEE,**
**4 November 2019 (2019-11-04), pages 1480 -**
**1487, XP033713948, DOI: 10.1109/**
**ICTAI.2019.00210**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## Technical Field

This disclosure relates to methods and systems for natural language processing. In particular, this disclosure proposes a neural network architecture that transforms an input sequence of words to a corresponding graph, and applies methods of graph learning on the constructed graph. The constructed model is applied to tasks of sequence tagging and classification.

## Background

Discrete sequence processing is a central task of natural language understanding. A majority of natural language processing problems, such as part-of-speech tagging, chunking, named entity recognition, syntactic parsing, natural language inference, and extractive machine reading, are commonly formalized as sequence labeling and sequence classification task. Solutions to these problems improve numerous applications related to text understanding like dialog systems or information retrieval.

In recent years, natural language processing has been revolutionized by the application of recurrent neural networks. Recurrent neural networks comprising an encoder that reads each symbol of an input sequence sequentially to update its hidden states have become models of choice for natural language processing. After reading the end of the sequence, the hidden state of the recurrent neural network is a summary of the input sequence. Advantageously, the encoder operates bi-directionally and further comprises an attention mechanism to contextualize the hidden state of the encoder.

However, with methods of the state-of-the-art, recognizing long range dependencies between sentences and paragraphs of a text, which is a requirement for achieving automatic text comprehension, remains a difficult task. For example, performing global inference between a concept mentioned in different sections of a document remains challenging. Also, multi-hop inference is rarely handled by state-of-the-art systems.

Graph convolutional neural networks have been proposed to cope with the need for global inference in sentence understanding tasks, e.g. in Henaff et al. "Deep convolutional neural networks on graph structured data", ar-Xiv:1506.05163, 2015, Kipf and Welling, "Semi-supervised classification with graph convolutional neural networks", Conference Track Proceedings of the 5th International Conference on Learning Representations, ICLR, 2017, or Schlichtkrull et al. "Modeling relational data with graph convolutional neural networks", European Semantic Web Conference, pp. 593-607, 2018.

These models require the input text to be transformed into graph structures, which represent words as nodes and include weighted links between nodes. However, in the state of the art, this transformation to a graph structure is performed in a hand-crafted manner, often employing diverse third party systems.

The present invention proposes a novel end-to-end graph convolutional neural network that transforms an input sequence of words into a graph via a convolutional neural network acting on an interaction matrix generated from the input sequence. In particular, in the proposed architecture, the graph structure is a latent dimension. The present invention further proposes a novel method of graph learning on the constructed graph. The constructed model is applied to tasks of sequence tagging and classification.

The disclosed approaches differ from similar approaches employing interaction matrices to model interaction between tokens as described in Seo et. al, "Bidirectional Attention Flow for Machine Comprehension", 5th International Conference on Learning Representations, ICLR 2017, Conference Track Proceedings, and Elbayad et al. "Pervasive Attention: 2D Convolutional Neural Networks for Sequence-to-Sequence Prediction", Proceedings of the 22nd Conference on Computational Natural Language Learning, CoNLL 2018, page 97.

The disclosed approaches also differ from similar approaches of learning of latent relational graphs as proposed in Yang et al. "GLoMo: Unsupervisedly Learned Relational Graphs" to capture dependencies between pairs of data units from large-scale unlabeled data.

Zhou Kai et al: "Multi-task Learning for Relation Extraction:, 2019 IEEE 31st International Conference on Tools with Artificial Intelligence (ICTAI), IEEE, 4 November 2019, pages 1480-1487, relates to a Multi-Task learning framework for Relation Extraction. The approach employs dependency parsing and entity type classification as auxiliary tasks and relation extraction as the target task. These tasks are simultaneously learnt from training instances to take advantage of inductive transfer between auxiliary tasks and the target task. A hierarchical neural network is constructed, which incorporates dependency and entity representations from auxiliary tasks into a more robust relation representation against the noisy labels.

## Summary

The object of the present invention is to provide an end-to-end machine learning approach for parsing language entry to a computer.

This object is solved by the subject-matter of the independent claims.

Embodiments of the present invention are defined by the dependent claims.

In this disclosure, a novel end-to-end differentiable model of graph convolution is proposed. This approach allows the system to capture dependencies between words in an unsupervised manner. In contrast to methods of the prior art, the graph structure computed from the input sequence is a latent variable.

The described architecture allows for efficient multi-task learning in that the system learns graph encoder parameters only once and trains task-specific differentiable message-passing parameters by using the output of the graph encoders.

The proposed approach employs a fully differentiable pipeline for end-to-end message-passing inference composed with node contextualization, graph learning and a step of inference. The disclosed framework can be used in a multitask setting for joint graph encoder learning and possible unsupervised pre-training. The disclosed method enables extraction of grammatically relevant relationships between tokens in an unsupervised manner.

The disclosed neural network system may be applied to locate tokens in natural language sentences that correspond to keys of a database and to enter the identified tokens into the database under the respective key. The present invention may also be applied to provide labels for tokens of a natural language statement to a form interface such that the form interface may employ the labels of the tokens to identify and fill slots where a respective token is to be entered.

In an embodiment, a system for entering information provided in a natural language sentence to a computing device is provided. The natural language sentence, comprising a sequence of tokens, is processed by a contextualization layer configured to generate a contextualized representation of the sequence of tokens. A dimension-preserving convolutional neural network is configured to employ the contextualized representation to generate output corresponding to a matrix which is employed by a graph convolutional neural network as a set of adjacency matrices. The system is further configured to generate a label for each token in the sequence of tokens based on hidden states for the token in the last layer of the graph convolutional neural network.

According to another embodiment, the system may further comprise a database interface configured to enter a token from the sequence of tokens in a database by employing the label of the token as a key. In this embodiment, the graph convolutional neural network is trained with a graph-based learning algorithm for locating, in the sequence of tokens, tokens that correspond to respective labels of a set of predefined labels.

In an alternative embodiment, the system may comprise a form interface configured to enter a token from the sequence of tokens in at least one slot of a form provided on the computing device, wherein the label of the token identifies the slot. In this embodiment, the graph convolutional neural network is trained with a graph-based learning algorithm for tagging tokens of the sequence of tokens with labels corresponding to a semantic meaning.

In embodiments, the graph convolutional neural network comprises a plurality of dimension-preserving convolution operators comprising a 1x1 convolution layer or a 3x3 convolution layer with a padding of one.

In other embodiments, the graph convolutional neural network comprises a plurality of dimension-preserving convolution operators comprising a plurality of DenseNet blocks. In a particular further embodiment, each of the plurality of DenseNet blocks comprises a pipeline of a batch normalization layer, a rectified linear units layer, a 1x1 convolution layer, a batch normalization layer, a rectified linear units layer, a $kxk$ convolution layer, and a dropout layer.

In another embodiment, the matrix generated by the dimension-preserving convolutional neural network is a multi-adjacency matrix comprising an adjacency matrix for each relation of a set of relations, whereby the set of relations corresponds to output channels of the graph convolutional neural network.

In embodiments, the graph-based learning algorithm is based on a message-passing framework.

In a particular embodiment, the graph-based learning algorithm is based on a message-passing framework, wherein the message-passing framework is based on calculating hidden representations for each token and for each relation by accumulating weighted contributions of adjacent tokens for the relation. The hidden state for a token in the last layer of the graph convolutional neural network is obtained by accumulating the hidden states for the token in the previous layer over all relations.

In another particular embodiment, the graph-based learning algorithm is based on a message-passing framework, wherein the message-passing framework is based on calculating hidden states for each token by accumulating weighted contributions of adjacent tokens, wherein each relation of the set of relations corresponds to a weight.

In an aspect of the present invention, the contextualization layer comprises a recurrent neural network. The recurrent neural network may be an encoder neural network employing bidirectional gated rectified units.

In a particular embodiment, the recurrent neural network generates an intermediary representation of the sequence of tokens that is fed to a self-attention layer comprised in the contextualization layer.

In yet another embodiment the graph convolutional neural network employs a history-of-word approach that employs the intermediary representation.

According to an embodiment, a method for entering information provided as a natural language sentence to a computing device is provided, the natural language sentence comprising a sequence of tokens. The method comprises constructing a contextualized representation of the sequence of tokens by a recurrent neural network, processing an interaction matrix constructed from the contextualized representation by dimension-preserving convolution operators to generate output corresponding to a matrix, employing the matrix as a set of adjacency matrices in a graph convolutional neural network, and generating a label for each token in the sequence of tokens based on values of the last layer of the graph convolutional neural network.

**Brief description of the Figures**

The accompanying drawings are incorporated into the specification for the purpose of explaining the principles of the embodiments. The drawings are not to be construed as limiting the invention to only the illustrated and described embodiments or to how they can be made and used. Further features and advantages will become apparent from the following and, more particularly, from the description of the embodiments as illustrated in the accompanying drawings, wherein:

Figure 1 illustrates a block diagram of a neural network system for token contextualization, graph construction, and graph learning;

Figure 2 illustrates a block diagram of a neural network system for entering information provided in a natural language sentence to a database;

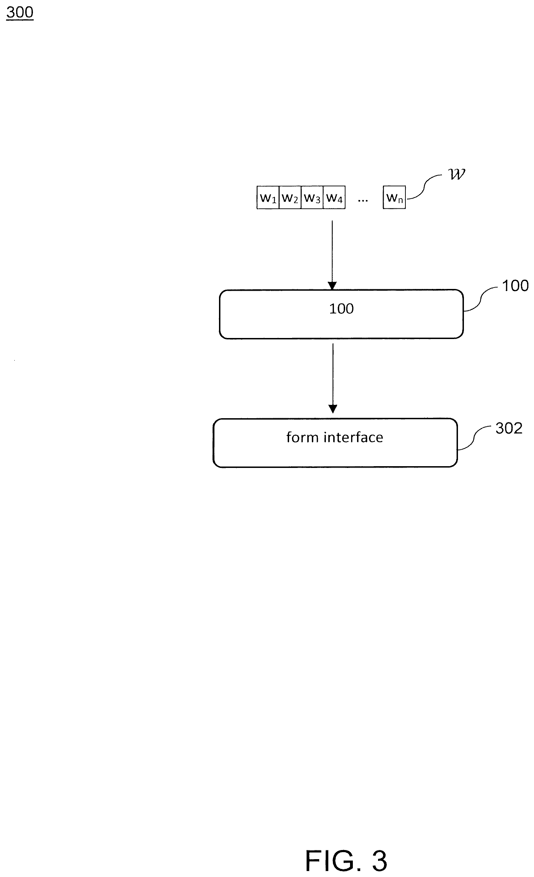

Figure 3 illustrates a block diagram of a neural network system for entering information provided in a natural language sentence to a form;

Figure 4 illustrates a process flow diagram of a method of training a neural network system for node contextualization, graph construction, and graph learning;

Figure 5 illustrates a process flow diagram of a method of entering information provided as a natural language sentence to a form or a database;

Figure 6 displays matrix entries of a multi-adjacency matrix obtained according to an embodiment;

Figure 7 shows grammatical dependencies produced by a method of the prior art for an example sentence;

Figure 8 shows latent adjacency relations generated according to an embodiment for the example sentence; and

Figure 9 illustrates an example architecture in which the disclosed methods and systems may be implemented.

**Detailed Description**

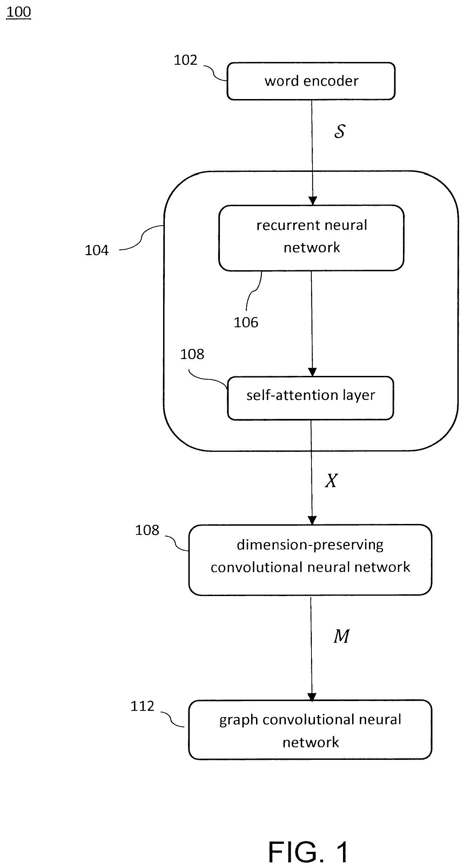

Figure 1 shows a natural language processing architecture 100 employing an end-to-end graph convolutional neural network according to an embodiment. The system comprises word encoder 102 configured to receive an input sequence of words or tokens, $W = \{w_1, w_2, \ldots, w_n\}$, where $w_i \in V$ with V being a vocabulary. W may form a sentence such as a declarative sentence or a question sentence. Word encoder 102 is configured to encode W in a set of vectors $\mathcal{S}$ that is provided to contextualization layer 104. Contextualization layer 104 generates a contextualized representation of $\mathcal{W}$. Output of contextualization layer 104 is inputted to dimension-preserving convolutional neural network 110 that produces a multi-adjacency matrix from the contextualized representation.

Multi-adjacency matrix $M$ describes relationships between each pair of words in W. Multi-adjacency matrix $M$ is employed by graph convolutional neural network 112 in a message-passing framework for the update between hidden layers, yielding a label for each token in the sequence of tokens.

Describing the architecture illustrated in Figure 1 in more detail, the sequence of words or tokens $\mathcal{W}$ may be retrieved from a user via an input module receiving typed input or employing speech recognition.

Word encoder 102 embeds words in $\mathcal{W}$ in a corresponding set of vectors $\mathcal{S} = \{x_1, x_2, \ldots, x_t, \ldots, x_s\}$. Using a representation of vocabulary $\mathcal{V}$ words are converted to vector representations, for example via one hot encoding that produces sparse vectors of length equal to the vocabulary. These vectors may further be converted to dense word vectors of much smaller dimensions. In embodiments, word encoding using, for example, fasttext, as described in Edouard Grave, "Learning Word Vectors for 157 Languages", Proceedings of the International Conference on Language Resources and Evaluation (LREC), 2018. In other embodiments, Glove, as described in Pennington et al. "Glove: Global Vectors for Word Representation", Proceedings of the 2014 Conference on Empirical Methods in Natural Language Processing (EMNLP), 2014, is employed. In yet further embodiments, word encoder 102 comprises trainable parameters and may be trained along with the further neural networks shown in Fig. 1 which are explained below. In other embodiments, word encoder 102 generates representations of $\mathcal{W}$ on a sub-word level.

## Contextualization layer

Contextualization layer 104, comprising recurrent neural network (RNN) 106, and, optionally, self-attention layer 108 is configured to contextualize encoded sequence $\mathcal{S}$. Contextualization layer 104 contextualize $\mathcal{S}$ by sequentially reading each $x_t$ and updating a hidden state of RNN 106. More particularly, RNN 106 acts as an encoder that generates in its hidden states an encoded representation of the sequence $S$. In embodiments, RNN 108 may be implemented as a bi-directional gated recurring unit (biGRU) as described in Cho et al. "Learning Phrase Representations using RNN Encoder-Decoder for Statistical Machine Translation", Proceedings of the 2014 Conference on Empirical Methods in Natural Language Processing, EMNLP, 2014.

In this embodiment, RNN 106 sequentially reads each vector from the input sequence $S$ and updates hidden states according to

$$z_t = \sigma_g(W_z x_t + U_z h_{t-1} + b_z) \ (1a)$$

$$r_t = \sigma_g(W_r x_t + U_r h_{t-1} + b_z) \ (1b)$$

$$h_t = z_t \circ h_{t-1} + (1 - z_t) \circ \sigma_h(W_h x_t + U_h(r_t \circ h_{t-1}) + b_h) \ (1c),$$

where $h_t \in \mathbb{R}^e$ is the vector of hidden states, $z_t \in \mathbb{R}^e$ is an updated gate vector, $r_t \in \mathbb{R}^e$ is a reset gate vector, $\circ$ is the element-wise product, and $\sigma_g$ and $\sigma_h$ are activation functions. In embodiments, $\sigma_g$ is a sigmoid function and $\sigma_h$ is the hyperbolic tangent function. Hence, RNN 106 reads each element of the input sequence S sequentially and changes its hidden state by applying a non-linear activation function to its previous hidden state, taking into account the read element. The non-linear activation transformation according to Eqs. (1a)-(1c) includes an update gate, $z_t$, that decides whether the hidden state is to be updated with a new hidden state, and a reset gate, $r_t$, that decides whether the previous hidden state is ignored. When appropriately trained, the final hidden state of RNN 106 corresponds to a summary of the input sequence $\mathcal{S}$ and thus also to a summary of input sentence $\mathcal{W}$.

According to the biGRU implementation, RNN 106 performs the updates according to equations (1a) to (1c) twice, once starting from the first element of $S$ to generate hidden state $\overrightarrow{h}_t$, and once with reversed update direction of equations (1a) to (1c), i.e. replacing subscripts t-1 with t+1, starting from the last element of $S$ to generate hidden state $\overleftarrow{h}_t$. Then, the hidden state of RNN 106 is the concatenation $[\overrightarrow{h}_t; \overleftarrow{h}_t]$.

The learning parameters of RNN 106 according to equations 1(a) to 1(c) are $W_z$, $W_r \in \mathbb{R}^{e \times s}$, $U_z$, $U_r$, $U_h \in \mathbb{R}^{e \times s}$, and $b_z$, $b_z$, $b_h \in \mathbb{R}^e$. By employing both reading directions, $\overrightarrow{h}_t$ takes into account context provided by elements previous to $x_t$ and $\overleftarrow{h}_t$ takes into account elements following $x_t$.

In a further step of processing, contextualization layer 104 may comprise self-attention layer 108. In an embodiment, a self-attention layer according to Yang et al. is employed, as described in Yang et al. "Hierarchical Attention Networks for Document Classification", Proceedings of NAACL-HLT 2016, pages 1480-1489. Specifically, in this embodiment the transformations

$$u_t = \sigma_h(W_{sa} h_t) \ (2a)$$

$$\alpha_{u_t}^{t'} = \frac{e^{(u_t^T u_{t'})}}{\sum_{t''=1}^{T} e^{(u_{t''}^T u_{t'})}} \quad (2b)$$

$$v_t = \sum_{t'=1}^{s} \alpha_{u_t}^{t'} h_{t'} \quad (2c)$$

are applied to the hidden states of RNN 106. In Eqs. 2(a) to 2(c), $\sigma_h$ is the hyperbolic tangent, $W_{sa} \in \mathbb{R}^{e \times e}$ is a learned matrix. Calculating $\alpha_u^{t'}$ hence involves scoring the similarity of $u_t$ with $u_{t'}$ and normalizing with a softmax function.

## Graph construction

Dimension-preserving convolutional neural network 110 employs transformed sequence $v \in \mathbb{R}^{s \times e}$ yielded from contextualization layer 104. The present disclosure proposes employing an interaction matrix $X$ constructed from $v$ to infer multi-adjacency matrix $M$ of a directed graph by convolutional neural network 108.

From the transformed sequence $v \in \mathbb{R}^{s \times e}$, interaction matrix $X \in \mathbb{R}^{s \times s \times 4e}$ is constructed according to

$$X_{ij} = [v_i; v_j; v_i - v_j; v_i \circ v_j] \quad (3),$$

where ";" is the concatenation operation. From $X,$ which is often termed an interaction matrix, dimension-preserving convolutional neural network 110 constructs matrix $M \in \mathbb{R}^{s \times s \times |\mathcal{R}|}$ which corresponds to a multi-adjacency matrix for a directed graph. The directed graph describes relationships between each pair of words of $\mathcal{W}$. Here, $|\mathcal{R}|$ is the number of relations considered. In an embodiment, $|\mathcal{R}| = 1$. In other embodiments the number of relations is $|\mathcal{R}| = 3, 6, 9, 12,$ or 16. In this manner, dimension-preserving convolution operators of dimension-preserving convolutional layer 108 are employed to induce a number of relationships between tokens of the input sequence W.

According to a particular embodiment, dimension-preserving convolutional layer is defined as $f_{i,j,k} = \max(w_k X_{i,j}, 0)$, which corresponds to a 1x1 convolution layer, which dimension-preserving convolutional layer is described in Lin et al. "Network In Network", arXiv: 1312.4400. In another embodiment, dimension-preserving convolutional layer 108 comprises a 3x3 convolution layer with a padding of 1.

In a specific embodiment, the 3 x 3 convolution layer employs Dense Net Blocks, as described in Huang et al "Densely Connected Convolutional neural networks", 2017 IEEE Conference on Computer Vision and Pattern Recognition, pages 2261-2269. According to this embodiment, information flow between all layers of the dimension-preserving convolutional layer is improved by direct connections from any layer to all subsequent layers, so that each layer receives the feature maps of all preceding layers as input. In a further specific embodiment, each Dense Net Block comprises an input layer, a batch normalization layer, a ReLU unit, a 1x1 convolution layer, followed by yet another batch normalization, a ReLU unit, a $kxk$ convolution layer, and a dropout layer.

Finally, a softmax operator is employed on the rows of the obtained matrix to achieve training stability and to satisfy the normalization constraint for an adjacency matrix of a directed graph. The number of output channels of the dimension-preserving convolution layer, as described above, allows the system to induce a set of relations between the tokens of the input sequence. Hence, word encoder 102, contextualization layer 104, and dimension-preserving convolutional layer 110 form a graph construction pipeline, generating a latent graph defined by multi-adjacency matrix M from input sentence $\mathcal{W}$.

## Relational Graph Convolution

Multi-adjacency matrix $M$ constructed by dimension-preserving convolutional layer 108 is employed by graph convolutional neural network 112 that is trained with a graph-based learning algorithm. Graph convolutional neural network 112 implements graph-based learning on a graph with nodes each corresponding to a word of $\mathcal{W}$ (or token from

$\mathcal{S}$ ) and having directed links defined by multi-adjacency matrix *M*. Graph convolutional neural network 112 defines transformations that depend on a type and a direction of edges of the graph defined by multi-adjacency matrix *M*.

In more detail, graph convolutional neural network 112 comprises *L* hidden layers having hidden states $h_i^l$ , *l* = 1,...,*L*. The model employed is based on a modification of a relational graph convolutional neural network to near-dense adjacency matrices, as described in Schlichtkrull et al. "Modelling Relational Data with Graph Convolutional Networks" in European Semantic Web Conference, pages 593-607, 2018.

The model employed according to embodiments is a special case of a differential message-passing framework. Differential message passing is defined by

$$h_i^{l+1} = \sigma_r \left( \sum_{m \in M_i} g_m(h_i^l, h_j^l) \right) \quad (4),$$

where $h_i^l \in \mathbb{R}^{d^{(l)}}$ is the hidden state of node $v_i$ and $d^{(l)}$ is the dimensionality of the representation of hidden layer *l*. In the general definition according to equation (4), $M_i$ is the set of incoming messages for node $v_i$, which is often chosen to be identical to the set of incoming edges at node $v_i$. Incoming messages contribute according to a weighting function $g_m$ applied to the hidden states $h_i^l$ and $h_j^l$.

In embodiments of the invention, $g_m(h_i^l, h_j^l) = W h_j^l$ with a weight matrix *W* as proposed in Kipf and Welling.

In embodiments, the propagation model employed by graph convolutional neural network 112 is given by

$$h_i^{l+1} = \sigma_r \left( \sum_{r \in \mathcal{R}} \sum_{j \in N_i^r} \frac{1}{c_{r,i}} W_r^l h_{r,j}^l + W_{r,0}^l h_{r,i}^l \right) \quad (5),$$

where $N_i^r$ is the set of indices of the neighbors of node i under relation $r \in R$ and $c_{i,r}$ is a problem-specific normalization constant. In embodiments, $c_{i,r}$ is learned. In other embodiments, $c_{i,r}$ is chosen in advance.

As defined exemplarily in Eq. (5), graph convolutional neural network 112 employs a message-passing framework that involves accumulating transformed feature vectors of neighboring nodes $N_i^r$ through a normalized sum.

Furthermore, to ensure that the representation of a node in layer *l* + 1 depends on a corresponding representation at layer *l*, a single self-connection is added to each node. Hence, updates of the graph convolutional layers consists of evaluating Eq. (5) in parallel for every node in the graph. In addition, multiple layers may be stacked to allow for dependencies across several relational steps.

According to another embodiment, graph convolutional neural network 112 employs a novel message-passing scheme termed separable message passing. Separable message passing treats each relation with a specific graph convolution. Separable message passing employs a parallel calculation of $|\mathcal{R}|$ hidden representations for each node. The hidden state for a token in the last layer is obtained by accumulating the $|\mathcal{R}|$ hidden representations for the token in the previous layer. In more detail, the separable message passing is defined by

$$h_{r,i}^{l+1} = \sigma_r \left( \sum_{j \in N_i^r} \frac{1}{c_{r,i}} W_r^l h_{r,j}^l + W_{r,0}^l h_{r,i}^l \right) \quad (6a)$$

$$h_i^{\text{last}} = \sigma_r \left( \sum_{r \in \mathcal{R}} h_{r,i}^L \right) \quad (6b),$$

where Eq. (6a) is evaluated for all $r \in R$. In Eq. (6a), $c_{r,i}$ is a normalization constant as described above, and $W_r^l$ and $W_{r,0}^l$ are learned weight matrices.

Another embodiment of graph convolutional neural network 112 further employs a history-of-word approach as described in Huang et al. "FusionNet: Fusing via Fully-Aware Attention with Application to Machine Comprehension", Conference Track Proceedings of the 6th International Conference on Learning Representations, ICLR, 2018.

In more detail, each node of the graph convolutional neural network is represented by the result of the concatenation

$$l(w_i) = \left[ w_i; \; v_i; \; h_i^{\mathsf{last}} \right].$$

**Training of the system**

Training of the system of Fig. 1 firstly comprises training the graph construction pipeline of contextualization layer 104 and dimension-preserving convolutional neural network 110. Training contextualization layer 104 comprises training RNN 106 and, optionally, training self-attention layer 108.

Training of the system of Fig. 1 secondly comprises training graph convolutional neural network 112. Trained contextualization layer 104 and trained convolutional neural network 108 can be employed for diverse tasks so that pipelines for different tasks can share the parameters of contextualization layer 104 and convolutional neural network 108, reducing expense for training the system of Fig. 1 for specific tasks.

For example, the system explained with reference to Figure 1 may be trained for specific tasks such as node classification and sequence classification which are central for natural language processing. For the task of node classification, the relational graph convolutional neural network layers are stacked with a softmax activation function on the output of the last layer, and the following cross entropy loss is minimized on all labelled nodes,

$$\mathcal{L} = \sum_{i \in Y} \sum_{k=1}^{K} t_{ik} \log h_{ik}^L \quad (7)$$

where $Y$ is the set of node indices and $h_{ik}^L$ is the $k$-th entry of the network output for the $i$-th node. The variable $t_{ik}$ denotes the ground truth label as obtained from the training set, corresponding to a supervised training of the system. The model with architecture as described above is trained using stochastic gradient descent of $\mathcal{L}$.

In other embodiments, the training set is only partially annotated so that the model is trained in a semi-supervised mode.

When training the model with architecture according to Figure 1 for sequence classification, the output of the relational graph convolutional layer is taken as input to a sequence classification layer. In one embodiment, a bi-directional long short-term memory layer, as explained in Hochreiter and Schmidhuber, "Long Short-Term Memory", Neural Computation 98, pages 1735-1780, 1997, is employed. In another embodiment, a fully connected layer is employed. The fully connected layer takes the result of a max pooling computed over the dimensions of the output node sequence. In this embodiment the categorical cross entropy of the predicted label associated with each sequence is minimized.

When trained, the system described with reference to Figure 1 is able to infer relationships between individual elements of the input sequence. In particular, the model can leverage explicitly modelled sentence-range relationships and perform inference from it in a fully differential manner.

**Evaluation**

During experiments performed on the system illustrated in Figure 1, ablation tests were performed to measure the impact of the pre-processing by the sequence contextualization by RNN 106 and self-attention layer 108.

To demonstrate the quality of the model described above with reference to Figure 1, the system was trained for the tasks of named entity recognition and slot filling, which are both instances of a node classification task.

The system was trained for the named entity recognition task employing the dataset CoNLL-2003, Tjong Kim Sang and De Meulder, "Introduction to the CoNLL-2003 Shared Task: Language-Independent Named Entity Recognition", Proceedings of the Seventh Conference on Natural Language Learning at HLT-NAACL 2003. Each word is tagged with the predefined labels of Person, Location, Organization, Miscellaneous or Other. The employed training set comprises 14987 sentences corresponding to 204567 tokens. The employed validation set comprises 3466 sentences and 51578 tokens.

The test set comprises 3684 sentences and 46666 tokens. In this task, the BIO annotation standard is employed. In this notation, the target variable counts a total of 9 distinct labels.

As a second demonstration, the system was trained for the slot filling task with the ATIS-3 corpus. The task is to localize specific entities in a natural-language-formulated request, i.e. the input sentence. Thus, given a specific semantic concept, e.g. a departure location, the presence of a specific entry corresponding to the semantic concept is determined and the corresponding entry is identified. The system is trained to detect the presence of a particular information ("slot") in the input sequence $\mathcal{W}$ and to identify the corresponding information. For example, in the sentence "I need to find a flight for tomorrow morning from Munich to Rome", Munich should be entered into the slot of a departure location and Rome should be entered into the slot of an arrival location. Also in this task, the BIO annotation standard is employed. The corpus counts a total of 128 unique tags created from the original annotations according to methods described in Raymond and Riccardi, "Generative and Discriminative Algorithms for Spoken Language Understanding", 8th Annual Conference of the International Speech Communication Association (INTERSPEECH), 2007, pages 1605-1608, wherein each word of the sequence is associated with a unique tag.

Table 1 gives details on parameters employed for training for the named entity recognition task (NER) and the slot filling task (SF).

*Table 1*

| Parameter | NER | SF |
|---|---|---|
| batch size | 32 | 8 |
| dropout | 0.4 | 0.2 |
| L2 | 1e-4 | 1e-4 |
| #relations | 9 | 16 |
| #precontext layers | 1 | 1 |
| hidden dimension | 64 | 64 |
| convolution type | Conv1x1 | DenseNet |
| lexicon | fasttext.en.300d | Glove.6B.300d |

In training for each task, the cross entropy loss according to Eq. (7) is minimized using the Adam optimization algorithm as stochastic gradient descent algorithm. Furthermore, a greedy-decoding method is employed for both tasks. The probability of each token being the first and the last element of the answer span is computed using two fully connected layers applied to the output of a biGRU computed over this concatenation.

Table 2 presents accuracy results for the named entity recognition task of the systems of the present disclosure in comparison with state-of-the-art systems. Table 2 displays results indicated as E2E-GCN of an embodiment employing a graph convolutional neural network employing message passing according to Eq. (5), and results indicated as E2E-Separable-GCN of an embodiment employing a graph convolutional neural network employing separable message passing according to Eq. (6a) and (6b).

*Table 2*

| System | Accuracy |
|---|---|
| HMM+Maxent (Florian et al. 2003) | 88.76 |
| MaxEnt (Chieu & Ng, 2003) | 88.31 |
| Semi-supervised (Ando & Zhang, 2005) | 89.31 |
| Conv-CRF(SG) (Collobert et al. 2011) | 89.59 |
| CRF with LIE (Passos et al. 2014) | 90.90 |
| BI-LSTM-CRF(SG) (Huang et al. 2015) | 90.10 |
| E2E-GCN (ours) | 90.40 |
| E2E-Separable-GCN (ours) | 91.7 |

Furthermore, it should be remarked that a majority of approaches of the comparative cases of Table 2 rely on steps involving manual intervention of the programmer, whereas results E2E-GCN and results E2E-GCN do not involve such steps but provide an end-to-end pipeline.

Table 3 presents results of the systems E2E-GCN and E2E-Separable-GCN for the slot filling task for ATIS-3 in comparison with results of state-of-the-art systems by the achieved $F_1$ score, which is a measure of the accuracy of the classification.

*Table 3*

| System | $F_1$ |
|---|---|
| Elman | 94.98 |
| Jordan | 94.29 |
| Hybrid | 95.06 |
| CRF | 92.94 |
| R-CRF (Mesnil et al. 2015) | 96.46 |
| E2E-GCN (ours) | 96.6 |
| E2E-Separable-GCN (ours) | 97.7 |

Table 4 shows performance of the embodiment trained for named entity recognition and the embodiment trained for slot filling in dependence on the number of relations $|\mathcal{R}|$. Table 4 shows accuracy achieved for the named entity recognition task and the $F_1$-score for the slot filling task employing the E2E-Separable-GCN embodiment with varying number of relations $|\mathcal{R}|$. As is apparent, the optimal number of relations is problem-dependent, as for the named entity recognition task nine relations achieves optimal performance, while for the slot filling task the $F_1$-score further increases with the number of considered relations.

*Table 4*

| $|\mathcal{R}|$ | NER | SF |
|---|---|---|
| 3 | 85.2 | 92.6 |
| 6 | 89.2 | 94.73 |
| 9 | 91.7 | 89.69 |
| 12 | 90.1 | 96.24 |
| 16 | 88.1 | 97.7 |

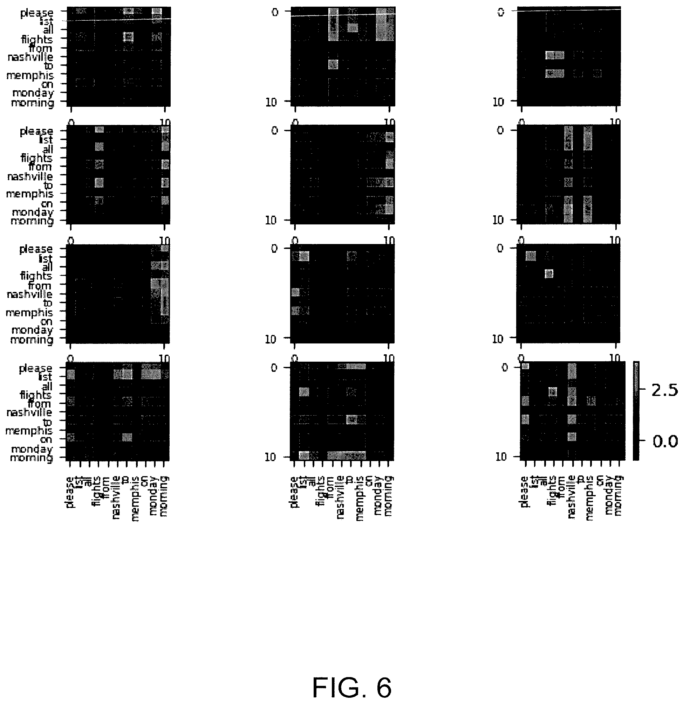

Figure 6 illustrates entries of the multi-adjacency matrix for the sentence $\mathcal{W}$ "please list all flights from Nashville to Memphis on Monday morning" generated according to principles explained above for the slot filling task. The subfigures of Fig. 6 print greyscale-coded matrix values of $M_{ij}^r$ for $r$ = 0, ... , 8.

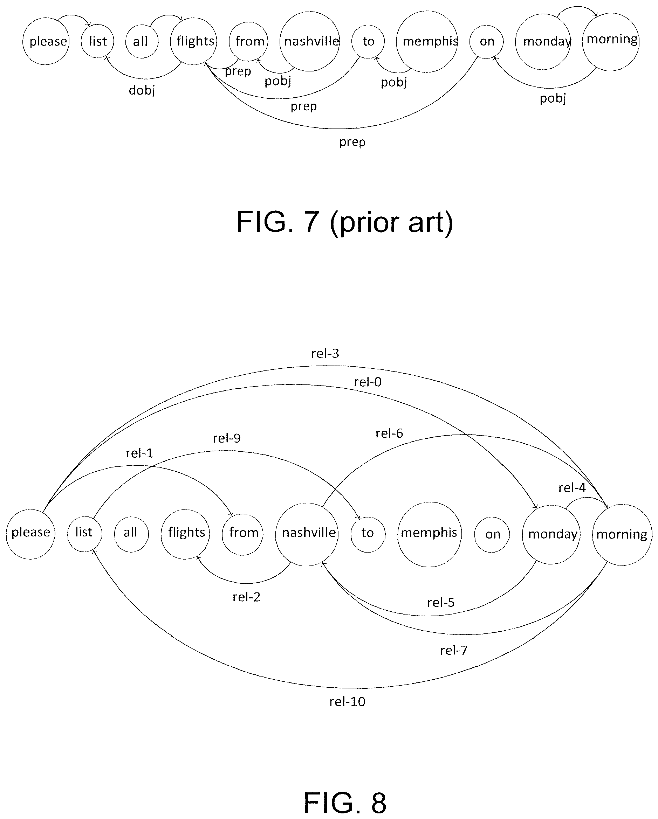

Figure 7 visualizes, for the same sentence $\mathcal{W}$ as above, relationships produced by a state-of-the-art dependency parser, while Figure 8 visualizes the relationships captured by a multi-adjacency matrix according to an embodiment. Figure 7 shows a result of a state-of-the-art dependency parser by Kiperwasser and Goldberg, "Simple and Accurate Dependency Parsing Using Bidirectional LSTM Feature Representations", TACL, 4, pages 313-327, code 116.

To produce Figure 8 from adjacency matrix $M_{ij}^r$ encoding the sentence $\mathcal{W}$, the pair of tokens $\{w_i, w_j\}$ of maximum value such that $x_r^* = \mathrm{argmax}_{i,j} M_{ij}^r$ is selected. Figure 8 thus demonstrates that the disclosed neural networks system is capable of extracting grammatically relevant relationships between tokens in an unsupervised manner.

In comparing Figures 7 and 8, a number of important differences of the disclosed approach to dependency parsers of the state-of-the-art are highlighted. Firstly, most of the dependency parsers of the state-of-the-art use queue stack systems to control the parsing process which imposes several restrictions as being based on a projective parsing formalism. In particular, this approach of state-of-the-art dependency parsers implies that a dependency can have only one head, represented as the arrow-head in Figures 7 and 8. In contrast, the approach disclosed here allows dependencies that have several heads.

Furthermore, due to the recurrent mechanism adopted by state-of-the-art neural dependency parsers, long-range dependencies between tokens are hardly ever represented, as is apparent from Figure 7. This limitation of the state-of-the-art approaches prevents contextual information being passed across the sentence, whereas, as apparent from Figure 8, the approach described here allows sentence length dependencies to be modelled.

In the model architecture, as described with reference to Figure 1, these long range dependencies are propagated by the graph convolution model across the sentence, partially explaining the achieved improvements over state-of-the-art models.

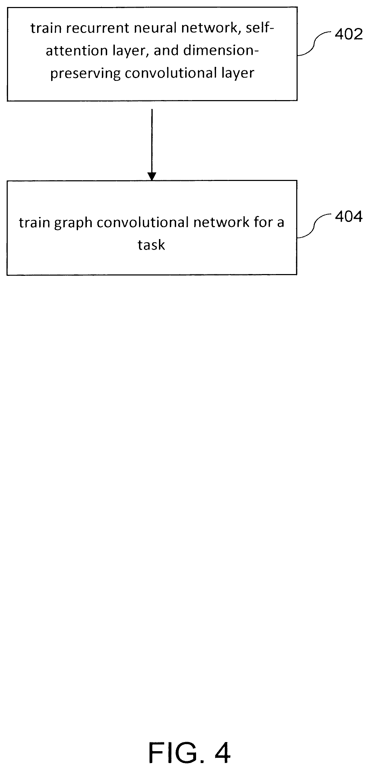

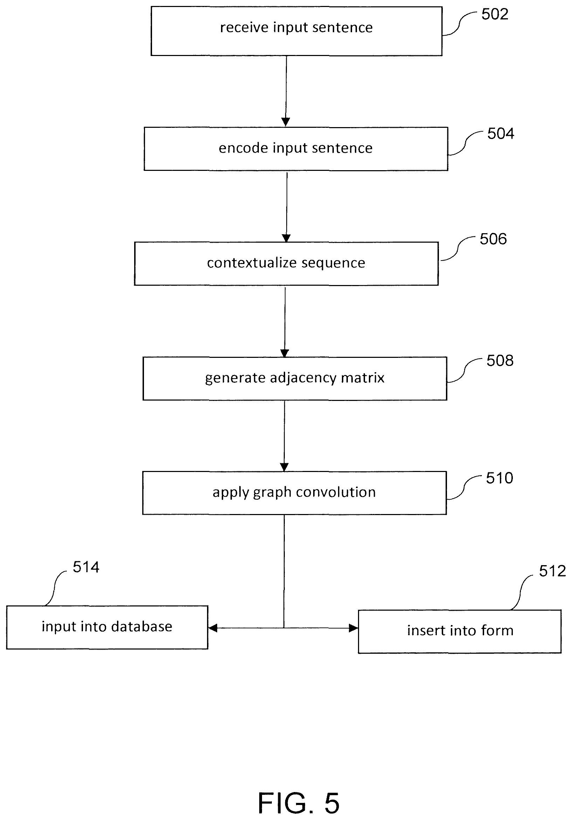

Further embodiments will now be described in detail in relation to the above and with reference to Figures 4 and 5, which are functional block diagrams illustrating computer-implemented methods 400 and 500, respectively.

Method 400 illustrated in Figure 4 comprises training 402 the graph construction pipeline of RNN 106, self-attention layer 108, and dimension-preserving convolutional layer 110.

Method 400 further comprises training 404 graph convolutional neural network 112 for a specific task, such as node classification or sequence classification. Training 404 graph convolutional neural network 112 includes evaluating a cross entropy loss such as cross entropy loss $\mathcal{L}$ from Eq. (7) for a training set and adjusting the hyperparameters of graph convolutional neural network 112, for example by stochastic gradient descent to optimize $\mathcal{L}$. Accuracy of the graph convolutional neural network 112 as currently trained may be evaluated on a validation set. Training may be stopped when the error on the validation dataset increases, as this is a sign of overfitting to the training dataset.

In embodiments, the graph construction pipeline and the graph convolutional neural network 112 are trained jointly employing the training set and the validation set.

In an embodiment, the specific task is database entry. For this specific task the training set may comprise natural language statements tagged with the predetermined keys of a database. In another embodiment, the specific task is filling out a form provided on a computing device. For this specific task the training set may arise from a specific domain and comprise natural language statements corresponding to a request. The requests may correspond to information required by the form. In the training set, words in a natural language statement may be tagged with a semantic meaning of the word in the natural language statement.

Training graph convolutional neural network 112 for a second specific task only requires repeating step 404 for the second specific task while employing the same trained pipeline of RNN 106, self-attention layer 108, and dimension-preserving convolutional layer 110.

Method 500 illustrated in Figure 5 relates to a method for entering information provided in a natural language sentence W to a computing device. More particularly, information provided in the natural language sentence W may be entered into a database stored on the computing device or may be entered in a form provided on the computing device.

Method 500 comprises employing neural networks trained according to the method 400 explained above. Method 500 includes receiving 502 the natural language sentence $\mathcal{W}$ from a user. The natural language sentence may be entered by any known input means, for example, by typing or via speech.

At step 504, the natural language sentence $\mathcal{W}$ is encoded in a corresponding sequence of word vectors $\mathcal{S}$, for example by word encoder 102 as explained above with reference to Figure 1.

At step 506, a sequence of contextualization steps is performed to word vectors $\mathcal{S}$ to produce a contextualized representation of the natural language sentence. Contextualization 506 may employ feeding the word vectors to contextualization layer 104 as explained with reference to Fig. 1.

At step 508 the contextualized representation is put through a dimension-preserving convolutional neural network, such as dimension-preserving convolutional neural network 108, to construct multi-adjacency matrix $M$ comprising adjacency matrices for a set of relations $\mathcal{R}$.

At step 510, the generated multi-adjacency matrix is processed by a graph convolutional neural network such as graph convolutional neural network 110, described with reference to Figure 1. In embodiments, the employed graph convolutional neural network may employ message passing according to Eq. (5) or separable message passing according to Eq. (6).

Method 500 finally comprises step 512 of employing the output of the last layer of the graph convolutional neural network to enter a token from the natural language sentence in a database employing a label generated by the graph convolutional neural network as a key. In this embodiment, graph convolutional neural network 112 has been trained with a training set tagged with the keys of the database.

Another embodiment of the present invention is practiced when a user has opened a form such as a web form of an HTTP site. Entries of the web form are employed to identify slots to be filled by information contained in the natural language sentence corresponding to a request that may be served by the HTTP site. In this embodiment, method 500 includes step 514 of identifying the presence of one or more words of the natural language that correspond to entries required in the form, and filling one or more slots of the form with one or more identified words, respectively.

For example, using again the exemplary case of listing flights, as contained in the ATIS-3 corpus, a web form may provide entries for a departure location and an arrival location and method 500 may comprise detecting the presence of a departure location and/or an arrival location in the natural language sentence, and filling the web form with the

corresponding word from $\mathcal{W}$.

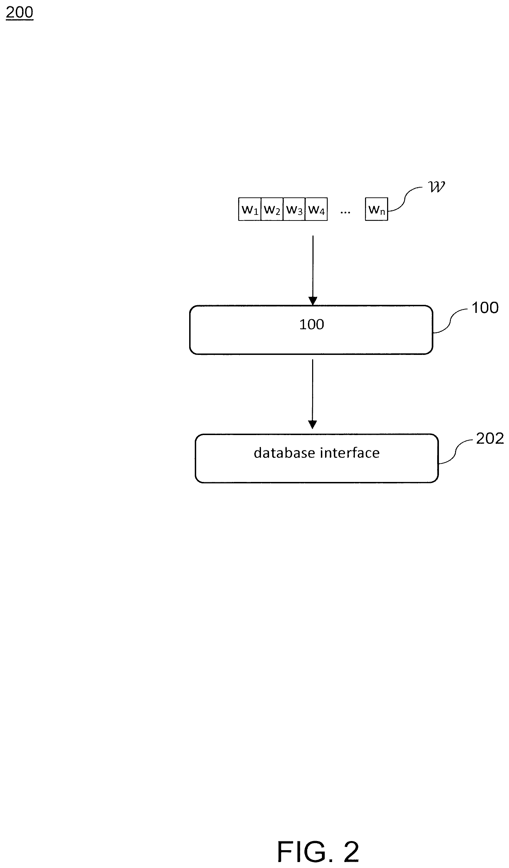

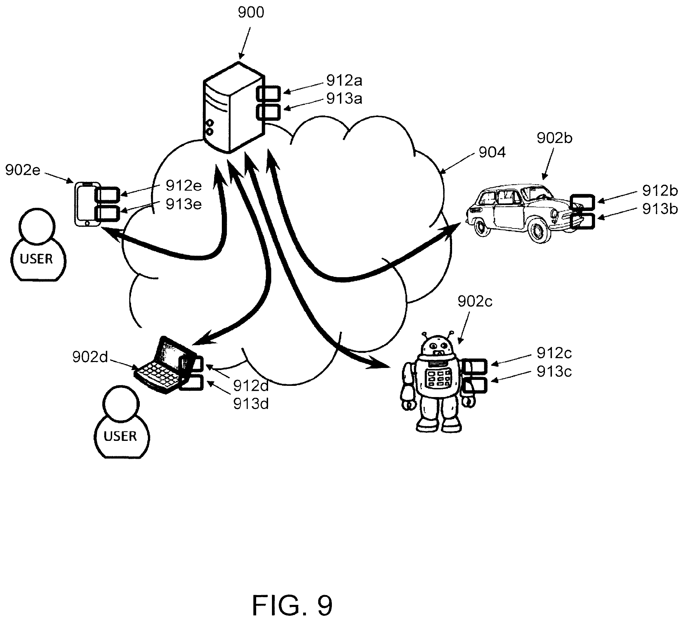

The above-mentioned systems, methods and embodiments may be implemented within an architecture such as that illustrated in Fig. 9, which comprises server 900 and one or more client devices 902 that communicate over a network 904 (which may be wireless and/or wired), such as the Internet, for data exchange. Server 900 and the client devices 902 each include a data processor 912 and memory 913, such as a hard disk. Client devices 902 may be any devices that communicate with server 900, including autonomous vehicle 902b, robot 902b, computer 902d, or cell phone 902e. More precisely, in an embodiment, the system according to the embodiments of Figs. 1 and 2 may be implemented by server 900.

Server 900 may receive a training set and use processor 912 to train the graph construction pipeline 106-110 and graph convolutional neural network 112. Server 900 may then store trained parameters of the graph construction pipeline 106-110 and graph convolutional neural network 112 in memory 913.

For example, after graph construction pipeline 106-110 and graph convolutional neural network 112, client device 902 may provide a received natural language statement to server 900, which employs stored parameters of graph construction pipeline 106-110 and graph convolutional neural network 112 to determine labels for words in the natural language statement. Server 900 may then process the natural language statement according to the determined labels, e.g. to enter information in a database stored in memory 913 or to fill out a form and provide information based on the filled out form back to client device 902. Additionally or alternatively, server 900 may provide the labels to client device 902.

Some or all of the method steps described above may be implemented by a computer in that they are executed by (or using) a processor, a microprocessor, an electronic circuit or processing circuitry.

The embodiments described above may be implemented in hardware or in software. The implementation can be performed using a non-transitory storage medium such as a computer-readable storage medium, for example a floppy disc, a DVD, a Blu-Ray, a CD, a ROM, a PROM, and EPROM, an EEPROM or a FLASH memory. Such computer-readable media can be any available media that can be accessed by a general-purpose or special-purpose computer system. Generally, embodiments can be implemented as computer program products with a program code or computer-executable instructions, the program code or computer-executable instructions being operative for performing one of the methods when the computer program product runs on a computer. The program code or the computer-executable instructions may, for example, be stored on a computer-readable storage medium.

In an embodiment, not according to the claimed invention, a storage medium (or a data carrier, or a computer-readable medium) comprises, stored thereon, the computer program or the computer-executable instructions for performing one of the methods described herein when it is performed by a processor.

Thus, the methods and systems disclosed herewith allow for an improved natural language processing, in particular by improving inference on long-range dependencies and thereby improving word classification tasks.

## Claims

1. A system for entering information provided in a natural language sentence to a database or to a form provided on a computing device, the natural language sentence comprising a sequence of tokens (W), the system comprising:

   an encoder neural network (102) configured to encode the sequence of tokens ($\mathcal{W}$) in a set of vectors (S);
   a contextualization layer (104) configured to generate a contextualized representation of the sequence of tokens (W) from the set of vectors (S);
   a dimension-preserving convolutional neural network (110) configured to employ the contextualized representation to generate output corresponding to a matrix (M); and
   a graph convolutional neural network (112) configured to employ the matrix (M) as a set of adjacency matrices,

   wherein the system is further configured to generate a label for each token in the sequence of tokens ($\mathcal{W}$) based on hidden states for the token in the last layer of the graph convolutional neural network (112),
   wherein the encoder neural network (102), the contextualization layer (104), and the dimension-preserving convolutional neural network (110) form a graph construction pipeline,
   wherein the matrix ($M$) defines a graph structure which is a latent variable of the graph construction pipeline,
   wherein the system further comprises:

   a database interface (202) configured to enter a token from the sequence of tokens ($\mathcal{W}$) into the database, wherein entering the token comprises employing the label of the token as a key, wherein the graph convolutional neural network (112) is trained with a graph-based learning algorithm for locating, in the

   sequence of tokens ($\mathcal{W}$), tokens that correspond to respective labels of a set of predefined labels, or

a form interface (302) configured to enter, into at least one slot of the form provided on the computing device, a token from the sequence of tokens ($\mathcal{W}$), wherein the label of the token identifies the slot, wherein the graph convolutional neural network (112) is trained with a graph-based learning algorithm for tagging tokens of the sequence of tokens ($\mathcal{W}$) with labels.

2. The system of claim 1, wherein the graph convolutional neural network (112) comprises a plurality of dimension-preserving convolution operators comprising a 1x1 convolution layer or a 3x3 convolution layer with a padding of one.

3. The system of one of claims 1 to 2, wherein the graph convolutional neural network (112) comprises a plurality of dimension-preserving convolution operators comprising a plurality of DenseNet blocks.

4. The system of claim 3, wherein each of the plurality of DenseNet blocks comprises a pipeline of a batch normalization layer, a rectified linear units layer, a 1x1 convolution layer, a batch normalization layer, a rectified linear units layer, a kxk convolution layer, and a dropout layer.

5. The system of one of the preceding claims, wherein the matrix ($M$) is a multi-adjacency matrix comprising an adjacency matrix for each relation of a set of relations, and the set of relations corresponds to output channels of the graph convolutional neural network (112).

6. The system of claim 1, wherein the graph-based learning algorithm is based on a message-passing framework.

7. The system of claim 6, wherein the message-passing framework is based on calculating hidden representations for each token and for each relation by accumulating weighted contributions of adjacent tokens for the relation, wherein the hidden state for a token in the last layer of the graph convolutional neural network (112) is obtained by accumulating the hidden states for the token in the previous layer over all relations.

8. The system of claim 6, wherein the message-passing framework is based on calculating hidden states for each token by accumulating over weighted contributions of adjacent tokens, wherein each relation of the set of relations corresponds to a weight.

9. The system of one of the preceding claims, wherein the contextualization layer (104) comprises a recurrent neural network (106).

10. The system of claim 9, wherein the recurrent neural network (106) is an encoder neural network employing bidirectional gated rectified units.

11. The system of claim 9, wherein the recurrent neural network (106) generates an intermediary representation of the sequence of tokens ($\mathcal{W}$), and wherein the contextualization layer (104) further comprises a self-attention layer (108) that is fed with the intermediary representation.

12. The system of claim 11, wherein the graph convolutional neural network (112) employs a history-of-word approach that employs the intermediary representation.

13. A method for entering information provided in a natural language sentence to a database interface or to a form interface provided on a computing device, the natural language sentence comprising a sequence of tokens ($\mathcal{W}$), the method comprising:

encoding (504), by an encoder neural network (102), the sequence of tokens ($\mathcal{W}$) in a set of vectors (S);
constructing (506), by a contextualization layer (104), a contextualized representation of the sequence of tokens ($\mathcal{W}$) from the set of vectors (S);
processing (508), by a dimension-preserving convolutional neural network (110), an interaction matrix ($X$) constructed from the contextualized representation by dimension-preserving convolution operators to generate output corresponding to a matrix ($M$);
employing (510) the matrix ($M$) as a set of adjacency matrices in a graph convolutional neural network (112); and
generating a label for each token in the sequence of tokens ($\mathcal{W}$) based on values of the last layer of the graph convolutional neural network (112),

wherein the encoder neural network (102), the contextualization layer (104), and the dimension-preserving convolutional neural network (110) form a graph construction pipeline,

wherein the matrix ($M$) defines a graph structure which is a latent variable of the graph construction pipeline, wherein the method further comprises:

employing (514) output of the graph convolutional neural network to enter a token from the sequence of tokens ($\mathcal{W}$) into the database interface, wherein entering the token comprises employing the label of the token as a key, wherein the graph convolutional neural network (112) is trained with a graph-based learning algorithm for locating, in the sequence of tokens ($\mathcal{W}$), tokens that correspond to respective labels of a set of predefined labels, or

employing (512) output of the graph convolutional neural network to enter, into at least one slot of the form interface, a token from the sequence of tokens ($\mathcal{W}$), wherein the label of the token identifies the slot, wherein the graph convolutional neural network (112) is trained with a graph-based learning algorithm for tagging tokens of the sequence of tokens ($\mathcal{W}$) with labels.

## Patentansprüche

1. Ein System zum Eingeben von Informationen, die in einem Satz in natürlicher Sprache bereitgestellt werden, in eine Datenbank oder in ein Formular, das auf einem Computergerät bereitgestellt wird, wobei der Satz in natürlicher Sprache eine Sequenz von Token ($\mathcal{W}$) aufweisend ist, wobei das System umfasst:

ein neuronales Kodierungsnetz (102), das so konfiguriert ist, dass es die Tokenfolge ($\mathcal{W}$) in einem Satz von Vektoren (S) kodiert;

eine Kontextualisierungsschicht (104), die so konfiguriert ist, dass sie eine kontextualisierte Darstellung der Tokenfolge ($\mathcal{W}$) aus dem Satz von Vektoren (S) erzeugt;

ein dimensionserhaltendes neuronales Faltungsnetzwerk (110), das so konfiguriert ist, dass es die kontextualisierte Darstellung verwendet, um eine Ausgabe zu erzeugen, die einer Matrix ($M$) entspricht; und

ein Graph-Convolutional-Neural-Netzwerk (112), das so konfiguriert ist, dass es die Matrix ($M$) als einen Satz von Adjazenzmatrizen verwendet,

wobei das System ferner so konfiguriert ist, dass es eine Kennzeichnung für jedes Token in der Tokenfolge ($\mathcal{W}$) auf der Grundlage versteckter Zustände für das Token in der letzten Schicht des Graph-Convolutional-Neural-Netzwerks (112) erzeugt,

wobei das neuronale Kodierungsnetz (102), die Kontextualisierungsschicht (104) und das dimensionserhaltende neuronale Faltungsnetz (110) eine Graphenkonstruktionspipeline bilden,

wobei die Matrix ($M$) eine Graphenstruktur definiert, die eine latente Variable der Graphenkonstruktionspipeline ist,

wobei das System weiterhin aufweist:

eine Datenbankschnittstelle (202), die so konfiguriert ist, dass sie ein Token aus der Sequenz von Token ($\mathcal{W}$) in die Datenbank eingibt, wobei das Eingeben des Tokens das Verwenden des Labels des Tokens als Schlüssel aufweisend ist, wobei das Graph-Convolutional-Neural-Netzwerk (112) mit einem graph-basierten Lernalgorithmus trainiert wird, um in der Sequenz von Token ($\mathcal{W}$) Token zu lokalisieren, die jeweiligen Labels eines Satzes von vordefinierten Labels entsprechen, oder

eine Formularschnittstelle (302), die so konfiguriert ist, dass sie in mindestens einen Schlitz des auf der Computervorrichtung bereitgestellten Formulars ein Token aus der Tokenfolge ($\mathcal{W}$) eingibt, wobei das Etikett des Tokens den Schlitz identifiziert, wobei das Graph-Convolutional-Neural-Netzwerk (112) mit einem graphbasierten Lernalgorithmus trainiert wird, um Token der Tokenfolge ($\mathcal{W}$) mit Etiketten zu versehen.

2. Das System nach Anspruch 1, wobei das Graph-Convolutional-Neural-Netzwerk (112) eine Vielzahl von dimensionserhaltenden Faltungsoperatoren aufweisend ist, die eine 1x1-Faltungsschicht oder eine 3x3-Faltungsschicht mit einem Padding von eins umfassen.

3. Das System nach einem der Ansprüche 1 bis 2, wobei das Graph-Convolutional-Neural-Netzwerk (112) eine Vielzahl von dimensionserhaltenden Faltungsoperatoren aufweisend ist, die eine Vielzahl von DenseNet-Blöcken umfassen.

4. Das System nach Anspruch 3, wobei jeder der Vielzahl von DenseNet-Blöcken eine Pipeline aus einer Batch-Normalisierungsschicht, einer Schicht mit gleichgerichteten linearen Einheiten, einer 1x1-Faltungsschicht, einer Batch-Normalisierungsschicht, einer Schicht mit gleichgerichteten linearen Einheiten, einer kxk-Faltungsschicht und einer Dropout-Schicht aufweisend ist.

5. Das System nach einem der vorhergehenden Ansprüche, wobei die Matrix ($M$) eine Multi-Adjazenz-Matrix ist, die eine Adjazenz-Matrix für jede Relation eines Satzes von Relationen aufweisend ist, und der Satz von Relationen den Ausgangskanälen des Graph-Convolutional-Neural-Netzwerks (112) entspricht.

6. Das System nach Anspruch 1, wobei der graphbasierte Lernalgorithmus auf einem Message-Passing-Framework basiert.

7. Das System nach Anspruch 6, wobei das Message-Passing-Framework auf der Berechnung versteckter Repräsentationen für jedes Token und für jede Relation durch Akkumulieren gewichteter Beiträge benachbarter Token für die Relation basiert, wobei der versteckte Zustand für ein Token in der letzten Schicht des Graph-Convolutional-Neural-Netzwerks (112) durch Akkumulieren der versteckten Zustände für das Token in der vorherigen Schicht über alle Relationen erhalten wird.

8. Das System nach Anspruch 6, wobei das Message-Passing-Framework auf der Berechnung verborgener Zustände für jedes Token durch Akkumulation übergewichteter Beiträge benachbarter Token basiert, wobei jede Relation des Satzes von Relationen einem Gewicht entspricht.

9. Das System nach einem der vorhergehenden Ansprüche, wobei die Kontextualisierungsschicht (104) ein rekurrentes neuronales Netz (106) aufweist.

10. Das System nach Anspruch 9, wobei das rekurrente neuronale Netz (106) ein neuronales Kodierernetz ist, das bidirektionale gleichgerichtete Einheiten mit Torsteuerung verwendet.

11. Das System nach Anspruch 9, wobei das rekurrente neuronale Netz (106) eine Zwischendarstellung der Tokenfolge ($\mathcal{W}$) erzeugt, und wobei die Kontextualisierungsschicht (104) ferner eine Selbstaufmerksamkeitsschicht (108) aufweisend ist, die mit der Zwischendarstellung gespeist wird.

12. Das System nach Anspruch 11, wobei das Graph-Convolutional-Neural-Netzwerk (112) einen History-of-Word-Ansatz anwendet, der die intermediäre Darstellung verwendet.

13. Ein Verfahren zum Eingeben von Informationen, die in einem Satz in natürlicher Sprache bereitgestellt werden, in eine Datenbankschnittstelle oder in eine Formularschnittstelle, die auf einer Computervorrichtung bereitgestellt wird, wobei der Satz in natürlicher Sprache eine Folge von Token ($\mathcal{W}$) aufweisend ist, wobei das Verfahren umfasst:

Kodierung (504) der Tokenfolge ($\mathcal{W}$) in einem Satz von Vektoren (S) durch ein neuronales Kodierungsnetz (102);

Konstruieren (506) einer kontextualisierten Darstellung der Tokenfolge ($\mathcal{W}$) aus der Menge der Vektoren (S) durch eine Kontextualisierungsschicht (104);
Verarbeitung (508) einer Interaktionsmatrix ($X$), die aus der kontextualisierten Darstellung durch dimensionserhaltende Faltungsoperatoren konstruiert wurde, durch ein dimensionserhaltendes neuronales Netz (110), um eine Ausgabe zu erzeugen, die einer Matrix ($M$) entspricht;
Verwenden (510) der Matrix ($M$) als einen Satz von Adjazenzmatrizen in einem Graph-Convolutional-Neural-Netzwerk (112); und

Erzeugen eines Labels für jedes Token in der Tokenfolge ($\mathcal{W}$) auf der Basis von Werten der letzten Schicht des Graph-Convolutional-Neural-Netzwerks (112),
wobei das neuronale Kodierungsnetz (102), die Kontextualisierungsschicht (104) und das dimensionserhaltende neuronale Faltungsnetz (110) eine Graphenkonstruktionspipeline bilden,
wobei die Matrix ($M$) eine Graphenstruktur definiert, die eine latente Variable der Graphenkonstruktionspipeline ist,

wobei das Verfahren weiterhin aufweist:

Verwenden (514) der Ausgabe des Graph-Convolutional-Neural-Netzwerks, um ein Token aus der Sequenz von Token ( $\mathcal{W}$ ) in die Datenbankschnittstelle einzugeben, wobei das Eingeben des Tokens das Verwenden des Labels des Tokens als einen Schlüssel aufweisend ist, wobei das Graph-Convolutional-Neural-Netzwerk (112) mit einem Graph-basierten Lernalgorithmus trainiert ist, um in der Sequenz von Token ( $\mathcal{W}$ ) Token zu lokalisieren, die jeweiligen Labels eines Satzes von vordefinierten Labels entsprechen, oder Verwenden (512) der Ausgabe des Graph-Convolutional-Neural-Netzwerks, um in mindestens einen Slot der Formularschnittstelle ein Token aus der Sequenz von Token ( $\mathcal{W}$ ) einzugeben, wobei das Label des Tokens den Slot identifiziert, wobei das Graph-Convolutional-Neural-Netzwerk (112) mit einem Graph-basierten Lernalgorithmus zum Markieren von Token der Sequenz von Token ( $\mathcal{W}$ ) mit Labels trainiert wird.

**Revendications**

1. Système pour entrer des informations fournies dans une phrase en langage naturel dans une base de données ou dans un formulaire mis à disposition sur un dispositif informatique, la phrase en langage naturel comprenant une séquence de jetons (*W*), le système comprenant :

un réseau neuronal d'encodeur (102) configuré pour encoder la séquence de jetons (*W*) dans un ensemble de vecteurs (*S*) ;
une couche de contextualisation (104) configurée pour générer une représentation contextualisée de la séquence de jetons (*W*) à partir de l'ensemble de vecteurs (*S*) ;
un réseau neuronal à convolution conservant les dimensions (110) configuré pour employer la représentation contextualisée pour générer une sortie correspondant à une matrice (*M*) ; et
un réseau neuronal à convolution graphique (112) configuré pour employer la matrice (*M*) comme un ensemble de matrices d'adjacence,
dans lequel le système est configuré en outre pour générer une étiquette pour chaque jeton présent dans la séquence de jetons (*W*) en fonction d'états cachés pour le jeton dans la dernière couche du réseau neuronal à convolution graphique (112),
dans lequel le réseau neuronal d'encodeur (102), la couche de contextualisation (104) et le réseau neuronal à convolution conservant les dimensions (110) constituent un pipeline de construction graphique,
dans lequel la matrice (*M*) définit une structure graphique qui constitue une variable latente du pipeline de construction graphique,
dans lequel le système comprend en outre :

une interface de base de données (202) configurée pour entrer un jeton issu de la séquence de jetons (*W*) dans la base de données, dans lequel une entrée du jeton comprend un emploi de l'étiquette du jeton en tant que clé, dans lequel le réseau neuronal à convolution graphique (112) est entraîné avec un algorithme d'apprentissage fondé sur des éléments graphiques pour localiser, dans la séquence de jetons (*W*), des jetons qui correspondent à des étiquettes respectives d'un ensemble d'étiquettes prédéfinies, ou
une interface de formulaire (302) configurée pour entrer, dans au moins un emplacement du formulaire mis à disposition sur le dispositif informatique, un jeton issu de la séquence de jetons (*W*), dans lequel l'étiquette du jeton identifie l'emplacement, dans lequel le réseau neuronal à convolution graphique (112) est entraîné avec un algorithme d'apprentissage fondé sur des éléments graphiques pour marquer des jetons de la séquence de jetons (*W*) avec des étiquettes.

2. Le système de la revendication 1, dans lequel le réseau neuronal à convolution graphique (112) comprend une pluralité d'opérateurs de convolution conservant les dimensions comprenant une couche de convolution 1x1 ou une couche de convolution 3x3 avec une complémentation de un.

3. Le système de l'une des revendications 1 et 2, dans lequel le réseau neuronal à convolution graphique (112) comprend une pluralité d'opérateurs de convolution conservant les dimensions comprenant une pluralité de blocs DenseNet.

4. Le système de la revendication 3, dans lequel chacun de la pluralité de blocs DenseNet comprend un pipeline d'une couche de normalisation de lots, d'une couche d'unités linéaires rectifiées, d'une couche de convolution 1x1, d'une couche de normalisation de lots, d'une couche d'unités linéaires rectifiées, d'une couche de convolution kxk et d'une couche d'abandon (dropout).

5. Le système de l'une des revendications précédentes, dans lequel la matrice ($M$) est une matrice à adjacences multiples comprenant une matrice d'adjacence pour chaque relation d'un ensemble de relations, et l'ensemble de relations correspond à des canaux de sortie du réseau neuronal à convolution graphique (112).

6. Le système de la revendication 1, dans lequel l'algorithme d'apprentissage fondé sur des éléments graphiques repose sur une structure de transmission de messages.

7. Le système de la revendication 6, dans lequel la structure de transmission de messages repose sur un calcul de représentations cachées pour chaque jeton et pour chaque relation en accumulant des contributions pondérées de jetons adjacents pour la relation, dans lequel l'état caché pour un jeton dans la dernière couche du réseau neuronal à convolution graphique (112) est obtenu en accumulant les états cachés pour le jeton dans la couche précédente à l'échelle de toutes les relations.

8. Le système de la revendication 6, dans lequel la structure de transmission de messages repose sur un calcul d'états cachés pour chaque jeton par accumulation sur des contributions pondérées de jetons adjacents, dans lequel chaque relation de l'ensemble de relations correspond à un poids.

9. Le système de l'une des revendications précédentes, dans lequel la couche de contextualisation (104) comprend un réseau de neurones récurrents (106).

10. Le système de la revendication 9, dans lequel le réseau de neurones récurrents (106) est un réseau neuronal d'encodeur employant des unités rectifiées bidirectionnelles à portes.

11. Le système de la revendication 9, dans lequel le réseau de neurones récurrents (106) génère une représentation intermédiaire de la séquence de jetons ($W$), et dans lequel la couche de contextualisation (104) comprend en outre une couche d'auto-attention (108) qui est alimentée avec la représentation intermédiaire.

12. Le système de la revendication 11, dans lequel le réseau neuronal à convolution graphique (112) fait appel à une approche historique-de-mot qui emploie la représentation intermédiaire.

13. Procédé pour entrer des informations fournies dans une phrase en langage naturel dans une interface de base de données ou dans une interface de formulaire mis à disposition sur un dispositif informatique, la phrase en langage naturel comprenant une séquence de jetons ($W$), le procédé comprenant :

   un encodage (504), par un réseau neuronal d'encodeur (102), de la séquence de jetons ($W$) dans un ensemble de vecteurs ($S$) ;
   une construction (506), par une couche de contextualisation (104), d'une représentation contextualisée de la séquence de jetons ($W$) à partir de l'ensemble de vecteurs ($S$) ;
   un traitement (508), par un réseau neuronal à convolution conservant les dimensions (110), d'une matrice d'interaction ($X$) construite à partir de la représentation contextualisée par des opérateurs de convolution conservant les dimensions pour générer une sortie correspondant à une matrice ($M$) ;
   un emploi (510) de la matrice ($M$) comme un ensemble de matrices d'adjacence dans un réseau neuronal à convolution graphique (112) ; et
   une génération d'une étiquette pour chaque jeton présent dans la séquence de jetons ($W$) en fonction de valeurs de la dernière couche du réseau neuronal à convolution graphique (112),
   dans lequel le réseau neuronal d'encodeur (102), la couche de contextualisation (104) et le réseau neuronal à convolution conservant les dimensions (110) constituent un pipeline de construction graphique,
   dans lequel la matrice ($M$) définit une structure graphique qui constitue une variable latente du pipeline de construction graphique,
   dans lequel le procédé comprend en outre :

      un emploi (514) d'une sortie du réseau neuronal à convolution graphique pour entrer un jeton issu de la séquence de jetons ($W$) dans la base de données, dans lequel une entrée du jeton comprend un emploi de l'étiquette du jeton en tant que clé, dans lequel le réseau neuronal à convolution graphique (112) est entraîné avec un algorithme d'apprentissage fondé sur des éléments graphiques pour localiser, dans la séquence de jetons (*W*), des jetons qui correspondent à des étiquettes respectives d'un ensemble d'étiquettes prédéfinies, ou

un emploi (512) d'une sortie du réseau neuronal à convolution graphique pour entrer, dans au moins un emplacement de l'interface de formulaire, un jeton issu de la séquence de jetons (*W*), dans lequel l'étiquette du jeton identifie l'emplacement, dans lequel le réseau neuronal à convolution graphique (112) est entraîné avec un algorithme d'apprentissage fondé sur des éléments graphiques pour marquer des jetons de la séquence de jetons (*W*) avec des étiquettes.

<u>100</u>

102

word encoder

$\mathcal{S}$

104

recurrent neural
network

106

108

self-attention layer

$X$

108

dimension-preserving
convolutional neural network

$M$

112

graph convolutional neural
network

# FIG. 1

200

$w_1$ $w_2$ $w_3$ $w_4$ ... $w_n$ $\mathcal{W}$

100

database interface 202

# FIG. 2

300

$\mathcal{W}$

| $w_1$ | $w_2$ | $w_3$ | $w_4$ | ... | $w_n$ |

100

100

form interface

302

# FIG. 3

train recurrent neural network, self-
attention layer, and dimension-
preserving convolutional layer — 402

train graph convolutional network for a
task — 404

# FIG. 4

receive input sentence — 502

encode input sentence — 504

contextualize sequence — 506

generate adjacency matrix — 508

apply graph convolution — 510

514 — input into database ← → insert into form — 512

# FIG. 5

FIG. 6

# FIG. 7 (prior art)

# FIG. 8

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HENAFF et al.** Deep convolutional neural networks on graph structured data. *arXiv:1506.05163*, 2015
- **KIPF** ; **WELLING**. Semi-supervised classification with graph convolutional neural networks. *Conference Track Proceedings of the 5th International Conference on Learning Representations, ICLR*, 2017
- **SCHLICHTKRULL et al.** Modeling relational data with graph convolutional neural networks. *European Semantic Web Conference*, 2018, 593-607
- **SEO**. Bidirectional Attention Flow for Machine Comprehension. *5th International Conference on Learning Representations, ICLR*, 2017
- **ELBAYAD et al.** Pervasive Attention: 2D Convolutional Neural Networks for Sequence-to-Sequence Prediction. *Proceedings of the 22nd Conference on Computational Natural Language Learning, CoNLL*, 2018, 97
- **YANG et al.** *GLoMo: Unsupervisedly Learned Relational Graphs*
- Multi-task Learning for Relation Extraction. **ZHOU KAI et al.** 2019 IEEE 31st International Conference on Tools with Artificial Intelligence (ICTAI). IEEE, 04 November 2019, 1480-1487
- **EDOUARD GRAVE**. Learning Word Vectors for 157 Languages. *Proceedings of the International Conference on Language Resources and Evaluation (LREC)*, 2018
- **PENNINGTON et al.** Glove: Global Vectors for Word Representation. *Proceedings of the 2014 Conference on Empirical Methods in Natural Language Processing (EMNLP)*, 2014
- **CHO et al.** Learning Phrase Representations using RNN Encoder-Decoder for Statistical Machine Translation. *Proceedings of the 2014 Conference on Empirical Methods in Natural Language Processing, EMNLP*, 2014
- **YANG et al.** Hierarchical Attention Networks for Document Classification. *Proceedings of NAACL-HLT*, 2016, 1480-1489
- **LIN et al.** Network In Network. *arXiv: 1312.4400*
- **HUANG et al.** Densely Connected Convolutional neural networks. *IEEE Conference on Computer Vision and Pattern Recognition*, 2017, 2261-2269
- **SCHLICHTKRULL et al.** Modelling Relational Data with Graph Convolutional Networks. *European Semantic Web Conference*, 2018, 593-607
- **HUANG et al.** FusionNet: Fusing via Fully-Aware Attention with Application to Machine Comprehension. *Conference Track Proceedings of the 6th International Conference on Learning Representations, ICLR*, 2018
- **HOCHREITER** ; **SCHMIDHUBER**. Long Short-Term Memory. *Neural Computation*, 1997, vol. 98, 1735-1780
- **TJONG KIM SANG** ; **DE MEULDER**. Introduction to the CoNLL-2003 Shared Task: Language-Independent Named Entity Recognition. *Proceedings of the Seventh Conference on Natural Language Learning at HLT-NAACL*, 2003
- **RAYMOND** ; **RICCARDI**. Generative and Discriminative Algorithms for Spoken Language Understanding. *Annual Conference of the International Speech Communication Association (INTERSPEECH)*, 2007, 1605-1608
- **KIPERWASSER** ; **GOLDBERG**. Simple and Accurate Dependency Parsing Using Bidirectional LSTM Feature Representations. *TACL*, vol. 4, 313-327